# EUROPÄISCHE PATENTSCHRIFT

(11) **EP 4 481 331 B1**
(45) Veröffentlichungstag und Bekanntmachung des Hinweises auf die Patenterteilung: **10.12.2025**
(21) Anmeldenummer: 23180649.8
(22) Anmeldetag: 21.06.2023
(51) Int. Cl.: G01D 5/244

(54) **ABTASTEINHEIT EINER POSITIONSMESSEINRICHTUNG**
SCANNING UNIT OF A POSITION MEASURING DEVICE
UNITÉ DE BALAYAGE D'UN DISPOSITIF DE MESURE DE POSITION

(43) Veröffentlichungstag der Anmeldung: 25.12.2024
(73) Patentinhaber: AMO Automatisierung Messtechnik Optik GmbH, 4963 St. Peter am Hart (AT)
(72) Erfinder: ADLHART, Wolfgang, 5274 Burgkirchen (AT); POMMER, Andreas, 5274 Burgkirchen (AT); HUBER, Helmut, 84518 Garching a.d. Alz (DE)
(74) Vertreter: Hofmann, Ernst

(56) Entgegenhaltungen:
- WO-A1-00/08418
- DE-A1- 102022 000 396

## Beschreibung

### GEBIET DER TECHNIK

Die vorliegende Erfindung betrifft eine Abtasteinheit einer Positionsmesseinrichtung nach dem Oberbegriff des Anspruchs 1.

### STAND DER TECHNIK

DE 10 2014 213 955 A1 offenbart eine Vorrichtung mit einer Abtasteinheit und einer Montagehilfe, mit der die Abtasteinheit um eine Drehachse eines Referenzelements drehbar ist. Die Montagehilfe ist dazu ausgebildet, um die Abtasteinheit dabei federnd an das Referenzelement zu drängen.

Weitere Vorrichtungen zur Fixierung einer Relativlage zwischen einer Abtasteinheit und einer Maßverkörperung sind aus WO 02/40947 A1, US 4,639,595 A, DE 43 04 914 A1, WO 00/08418 A1 und EP 2 905 582 A1 bekannt

### ZUSAMMENFASSUNG DER ERFINDUNG

Der vorliegenden Erfindung liegt die Aufgabe zugrunde, eine Abtasteinheit einer Positionsmesseinrichtung anzugeben, die kompakt und kostengünstig aufgebaut ist und mit der eine einfache Montage mit hoher Genauigkeit ermöglicht wird. Diese Aufgabe wird erfindungsgemäß durch eine Abtasteinheit mit den Merkmalen des Anspruchs 1 gelöst.

Die erfindungsgemäß ausgebildete Abtasteinheit umfasst ein Gehäuse, ein oder mehrere in dem Gehäuse angeordnete Durchgangsöffnungen zum Befestigen der Abtasteinheit an einem Objekt und ein oder mehrere Befestigungselemente, die sich durch die Durchgangsöffnungen hindurch erstrecken. Die Abtasteinheit weist ein oder mehrere flexible Elemente auf. Die ein oder mehreren flexiblen Elemente erstrecken sich zumindest teilweise durch die Durchgangsöffnungen hindurch. Die ein oder mehreren flexiblen Elemente sind dazu ausgebildet, das Gehäuse der Abtasteinheit an ein Referenzelement anzudrücken.

Vorzugsweise wird durch die flexiblen Elemente und die Befestigungselemente eine Vorspannvorrichtung gebildet. Die Vorspannvorrichtung kann auch als Montagehilfe bezeichnet werden.

Es ist vorteilhaft, wenn die flexiblen Elemente dazu ausgebildet sind, eine vorbestimmte Andruckkraft zu erzeugen, durch die das Gehäuse der Abtasteinheit an das Referenzelement angedrückt wird.

Ferner ist es vorteilhaft, wenn die flexiblen Elemente dazu ausgebildet sind, die Befestigungselemente in den Durchgangsöffnungen derart vorzuspannen, dass die vorbestimmte Andruckkraft erzeugt wird.

Vorzugsweise sind die flexiblen Elemente schlauchförmig (z. B. hohlzylinderförmig) ausgebildet.

Vorzugsweise sind die flexiblen Elemente elastisch verformbare Elemente. Beispielsweise sind die flexiblen Elemente aus Silikon oder Gummi hergestellt.

Vorzugsweise sind die Befestigungselemente als Befestigungsschrauben oder Befestigungsbolzen ausgebildet.

Eine Positionsmesseinrichtung mit einer Maßverkörperung und der erfindungsgemäßen Abtasteinheit ist im Anspruch 11 angegeben.

Es ist vorteilhaft, wenn die Positionsmesseinrichtung das Referenzelement aufweist und wenn das Referenzelement zwischen der Maßverkörperung und der Abtasteinheit angeordnet ist.

Vorzugsweise ist das Referenzelement eine flexible Folie mit einer vorbestimmten Dicke und/oder einer vorbestimmten Krümmung. Beispielsweise entspricht die vorbestimmte Dicke einem Abstand zwischen der Maßverkörperung und der Abtasteinheit. Ferner ist die vorbestimmte Krümmung beispielsweise an einen Radius bzw. Durchmesser der Maßverkörperung angepasst (im Fall einer rotatorischen Positionsmesseinrichtung). Im Fall einer linearen Positionsmesseinrichtung kann die flexible Folie an eine Ebene der Messteilung der Maßverkörperung angepasst sein. In vorteilhafter Weise dient die flexible Folie als Abstandshalteelement.

Durch die Erfindung wird mit einer kompakt und kostengünstig aufgebauten Abtasteinheit eine einfache Montage einer Positionsmesseinrichtung ermöglicht. Die Positionsmesseinrichtung umfasst eine Maßverkörperung und die Abtasteinheit. Bei der Montage der Positionsmesseinrichtung wird eine hohe Genauigkeit, d. h. eine präzise (bzw. im Wesentlichen fehlerfreie) Einstellung eines Abstands (im Folgenden Abtastspalt) zwischen der Maßverkörperung und der Abtasteinheit, erreicht. Die Montage umfasst beispielsweise die folgenden Schritte: (i) Anordnen eines Referenzelements zwischen der Maßverkörperung und der Abtasteinheit; (ii) ortsfeste Befestigung der Abtasteinheit an einem Objekt derart, dass durch in der Abtasteinheit integrierte flexible Elemente das Gehäuse der Abtasteinheit an das Referenzelement angedrückt wird; und (iii) Entfernen des Referenzelements von der Maßverkörperung und der Abtasteinheit. Die Erfindung ermöglicht insbesondere ein definiertes Andrücken (bzw. eine flexible Anfederung) der Abtasteinheit an das Referenzelement. Dadurch können Fehler oder Ungenauigkeiten bei der Montage, z. B. durch unsachgemäßes manuelles Andrücken der Abtasteinheit, vermieden werden. Somit werden die hohe Genauigkeit der Montage bzw. die fehlerfreie Einstellung des Abtastspalts erreicht.

Vorteilhafte Ausbildungen der Erfindung entnimmt den abhängigen Ansprüchen.

Weitere Einzelheiten und Vorteile der vorliegenden Erfindung werden anhand der nachfolgenden Beschreibung von Ausführungsbeispielen der Erfindung in Verbindung mit den Figuren erläutert.

### KURZE BESCHREIBUNG DER ZEICHNUNGEN

Es zeigt
- Figur 1: eine perspektivische Explosionsansicht einer Positionsmesseinrichtung gemäß einem ersten Ausführungsbeispiel mit durchgängig ausgebildeten flexiblen Elementen;
- Figur 2: eine perspektivische Explosionsansicht einer Positionsmesseinrichtung gemäß einem zweiten Ausführungsbeispiel mit durchgängig ausgebildeten flexiblen Elementen;
- Figur 3: eine Seitenansicht der Positionsmesseinrichtung nach Figur 2 mit einer Schnittlinie A-A und einer Schnittlinie B-B;
- Figur 4a: eine Schnittdarstellung entlang der Schnittlinie A-A in Figur 3;
- Figur 4b: eine Schnittdarstellung entlang der Schnittlinie B-B in Figur 3;
- Figur 5a: eine Schnittdarstellung analog zur Schnittdarstellung nach Figur 4a mit einem flexiblen Element mit einem ersten Paar von Teilabschnitten;
- Figur 5b: eine Schnittdarstellung analog zur Schnittdarstellung nach Figur 4b mit einem flexiblen Element mit einem zweiten Paar von Teilabschnitten;
- Figur 6a: eine Schnittdarstellung analog zur Schnittdarstellung nach Figur 4a mit einem flexiblen Element mit einem einzigen Teilabschnitt; und
- Figur 6b: eine Schnittdarstellung analog zur Schnittdarstellung nach Figur 4b mit einem flexiblen Element mit einem einzigen Teilabschnitt.

### BESCHREIBUNG DER AUSFÜHRUNGSFORMEN

Gleiche Elemente oder funktionell gleiche Elemente sind in den Figuren mit gleichen Bezugszeichen versehen.

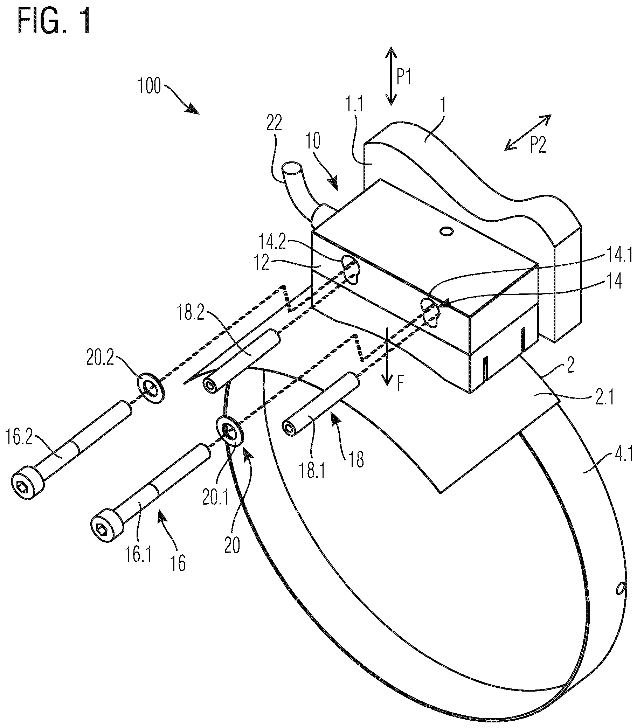

Ein erstes Ausführungsbeispiel wird nachfolgend anhand von Figur 1 erläutert. Die Positionsmesseinrichtung 100 gemäß dem ersten

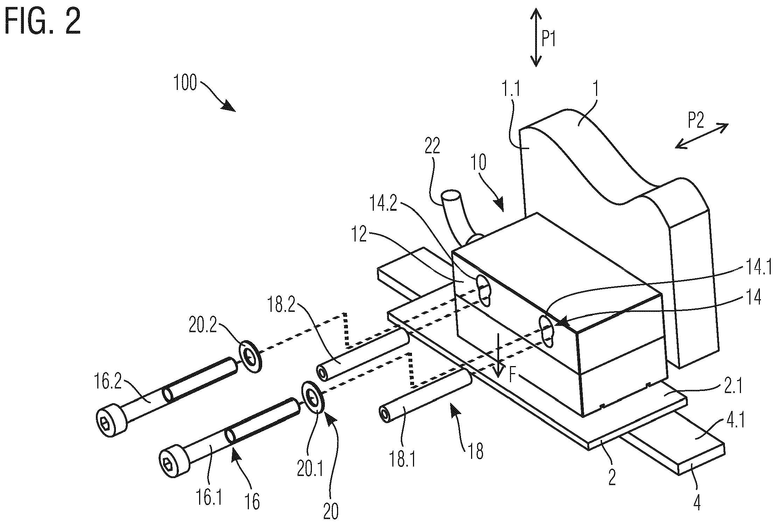

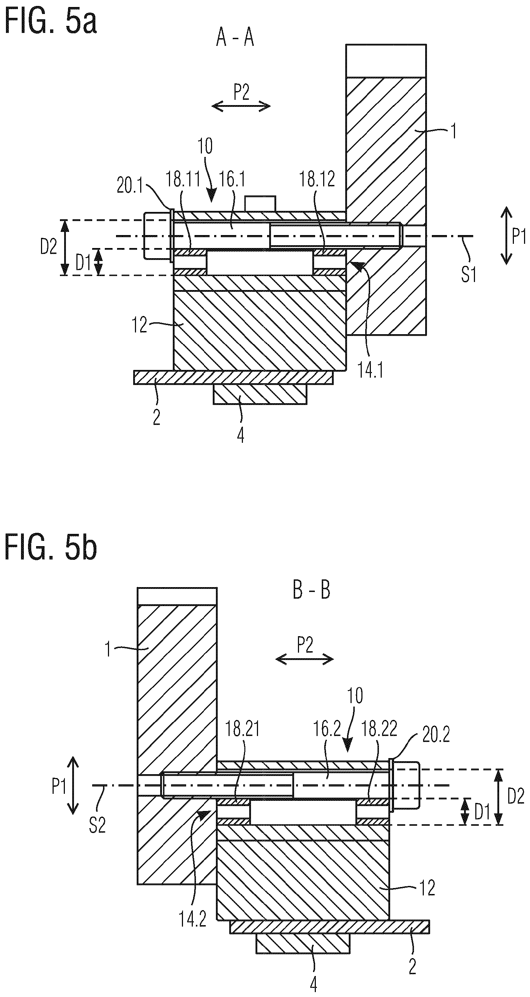

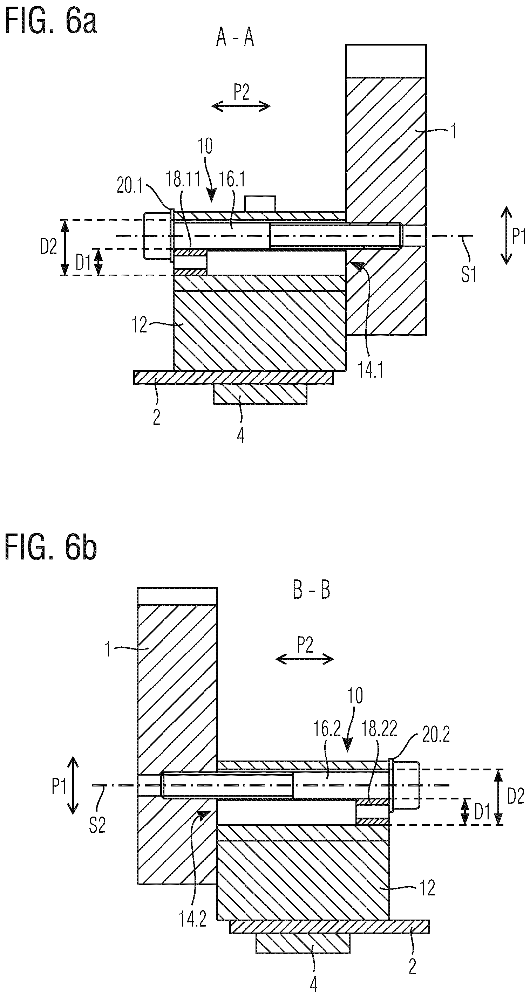

Ausführungsbeispiel ist insbesondere eine rotatorische Positionsmesseinrichtung. Ein zweites Ausführungsbeispiel wird nachfolgend anhand von Figur 2 bis 4b erläutert. Die Positionsmesseinrichtung 100 gemäß dem zweiten Ausführungsbeispiel ist insbesondere eine lineare Positionsmesseinrichtung. In Figur 5a und 5b ist eine beispielhafte erste alternative Ausgestaltung von flexiblen Elementen 18 der Positionsmesseinrichtung 100 gemäß dem zweiten Ausführungsbeispiel gezeigt (im Folgenden drittes Ausführungsbeispiel). In Figur 6a und 6b ist eine beispielhafte zweite alternative Ausgestaltung der flexiblen Elemente 18 der Positionsmesseinrichtung 100 gemäß dem zweiten Ausführungsbeispiel gezeigt (im Folgenden viertes Ausführungsbeispiel).

Die Positionsmesseinrichtung 100 nach Figur 1 umfasst eine Maßverkörperung mit einer Messteilung 4.1 und eine Abtasteinheit 10. Die Abtasteinheit 10 dient zur Abtastung der Messteilung 4.1 der Maßverkörperung. In Figur 1 ist ein Teilungsträger der Maßverkörperung nicht gezeigt.

Ferner umfasst die Positionsmesseinrichtung 100 nach Figur 1 ein Referenzelement 2. Das Referenzelement 2 ist zwischen der Messteilung 4.1 der Maßverkörperung und der Abtasteinheit 10 angeordnet. Das Referenzelement 2 dient als Abstandshalteelement (z. B. flexible Folie mit einer vorbestimmten Dicke). Das Referenzelement 2 ist im montierten Zustand (d. h. in einem an einem Objekt 1 befestigten Zustand) der Abtasteinheit 10 von der Messteilung 4.1 der Maßverkörperung und der Abtasteinheit 10 entfernbar.

Wie in Figur 1 gezeigt, umfasst die Abtasteinheit 10 ein Gehäuse 12, mehrere in dem Gehäuse 12 angeordnete Durchgangsöffnungen 14 (erste und zweite Durchgangsöffnung 14.1, 14.2) und mehrere Befestigungselemente 16 (erstes und zweites Befestigungselement 16.1, 16.2). Die Durchgangsöffnungen 14 dienen zum Befestigen der Abtasteinheit 10 an dem Objekt 1. Die Befestigungselemente 16 sind als Befestigungsschrauben oder Befestigungsbolzen ausgebildet und erstrecken sich durch die Durchgangsöffnungen 14 hindurch. Ferner ist in Figur 1 gezeigt, dass die Abtasteinheit 10 mehrere flexible Elemente 18 (erstes und zweites flexibles Element 18.1, 18.2) aufweist. Die flexiblen Elemente 18 erstrecken sich zumindest teilweise durch die Durchgangsöffnungen 14 hindurch. Die flexiblen Elemente 18 sind dazu ausgebildet, das Gehäuse 12 der Abtasteinheit 10 an das Referenzelement 2 anzudrücken. Eine vorbestimmte Andruckkraft ist in Figur 1 durch den Pfeil F dargestellt.

Darüber hinaus ist in Figur 1 gezeigt, dass die Abtasteinheit 10 mehrere Unterlegscheiben 20 (erste und zweite Unterlegscheibe 20.1, 20.2) aufweist, durch die sich die Befestigungselemente 16 erstrecken.

In Figur 1 sind eine erste Richtung P1 und eine zweite Richtung P2 gezeigt. Die erste Richtung P1 ist senkrecht zu einer Oberfläche 2.1 des Referenzelements 2. Die zweite Richtung P2 ist senkrecht zu einer Oberfläche 1.1 des Objekts 1. Die vorbestimmte Andruckkraft F ist parallel zur ersten Richtung P1. Die erste Richtung P1 und die zweite Richtung P2 sind zwei zueinander orthogonale Richtungen.

In Figur 1 ist zudem ein Abschnitt 22 eines Kabels der Abtasteinheit 10 gezeigt.

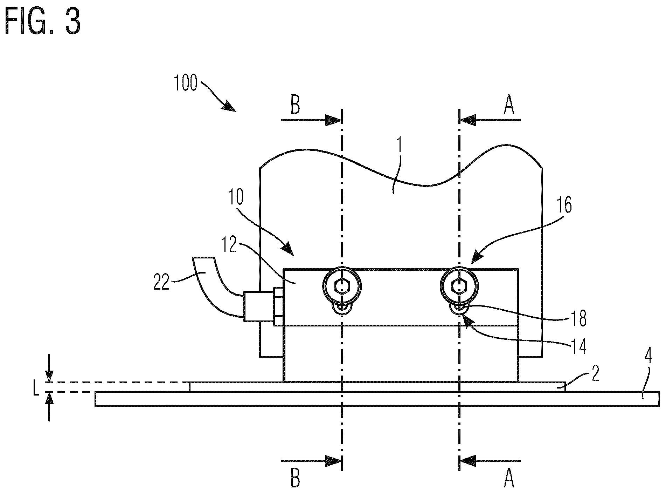

Die Positionsmesseinrichtung gemäß dem zweiten Ausführungsbeispiel unterscheidet sich von der Positionsmesseinrichtung gemäß dem ersten Ausführungsbeispiel dadurch, dass die Maßverkörperung 4 mit der Messteilung 4.1 ein Maßstab (d. h. Linear-Maßstab) ist. Das Referenzelement 2 ist zwischen der Maßverkörperung 4 in Form des Linear-Maßstabs und der Abtasteinheit 10 angeordnet (vgl. Figur 2). Das Referenzelement 2 dient wiederum als Abstandshalteelement zur Einstellung eines Abstands (d. h. Abstand L in der Seitenansicht von Figur 3) zwischen der Maßverkörperung 4 und der Abtasteinheit 10. Beispielsweise ist das Referenzelement 2 eine flexible Folie mit einer vorbestimmten Dicke. Dabei entspricht die vorbestimmte Dicke dem Abstand L (vgl. Figur 3).

In Figur 2 sind wiederum die vorbestimmte Andruckkraft F sowie die erste Richtung P1 und die zweite Richtung P2 gezeigt.

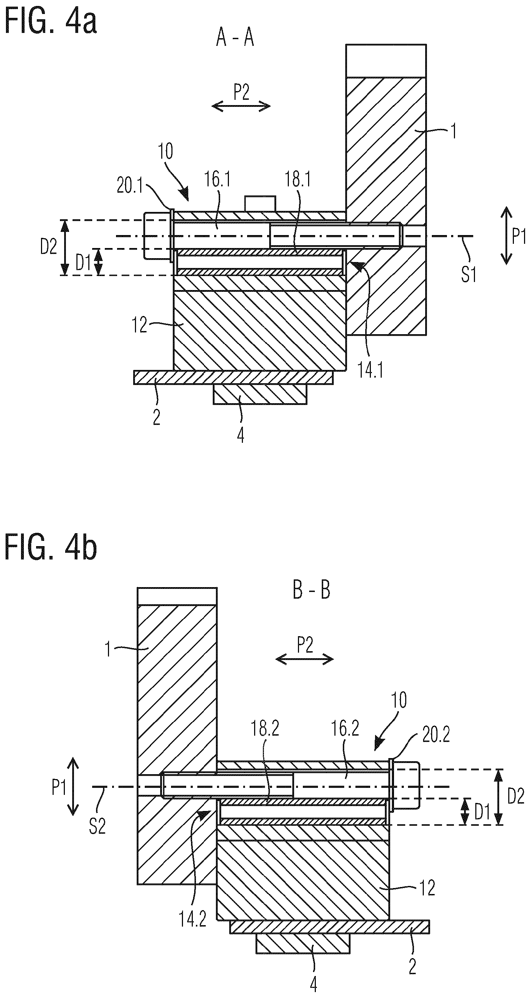

In der Schnittdarstellung von Figur 4a sind das erste Befestigungselement 16.1 und das erste flexible Element 18.1 gezeigt. In Figur 4a ist zudem eine Längsachse S1 des ersten Befestigungselements 16.1 gezeigt. Die Längsachse S1 verläuft parallel zur zweiten Richtung P2. In der Schnittdarstellung von Figur 4b sind das zweite Befestigungselement 16.2 und das zweite flexible Element 18.2 gezeigt. In Figur 4b ist zudem eine Längsachse S2 des zweiten Befestigungselements 16.2 gezeigt. Die Längsachse S2 verläuft parallel zur zweiten Richtung P2.

In Bezug auf Figur 4a wird durch das erste flexible Element 18.1 und das erste Befestigungselement 16.1 ein Teil einer Vorspannvorrichtung gebildet. In Bezug auf Figur 4b wird durch das zweite flexible Element 18.2 und das zweite Befestigungselement 16.2 ein weiterer Teil der Vorspannvorrichtung gebildet. Insgesamt wird durch die flexiblen Elemente 18 (d. h. das erste und zweite flexible Element 18.1, 18.2) die vorbestimmte Andruckkraft F erzeugt (vgl. Figur 2). Durch die Vorspannvorrichtung wird somit das Gehäuse 12 der Abtasteinheit 10 in definierter Weise an das Referenzelement 2 angedrückt. Die vorbestimmte Andruckkraft F entsteht dabei im Wesentlichen in der Mitte zwischen der Schnittlinie A-A und der Schnittlinie B-B (vgl. Figur 2 und 3).

Wie in Figur 2 zu erkennen, sind die flexiblen Elemente 18 dazu ausgebildet, das Gehäuse 12 der Abtasteinheit 10 in der ersten Richtung P1 an das Referenzelement 2 anzudrücken.

In Bezug auf Figur 2, 4a und 4b erstrecken sich die flexiblen Elemente 18 innerhalb der Durchgangsöffnungen 14 in der zweiten Richtung P2. Wie in Figur 2, 4a und 4b zu erkennen, sind die flexiblen Elemente 18 (d. h. das erste und zweite flexible Element 18.1, 18.2) in der zweiten Richtung P2 durchgängig ausgebildet.

In der Schnittdarstellung von Figur 5a sind das erste Befestigungselement 16.1 und Teilabschnitte 18.11, 18.12 eines ersten Paares gezeigt. Die Teilabschnitte 18.11, 18.12 des ersten Paares bilden das erste flexible Element 18.1 (hier beispielhafte erste alternative Ausgestaltung). Die Schnittdarstellung von Figur 5a entspricht im Wesentlichen der Schnittdarstellung von Figur 4a.

In Figur 5b sind das zweite Befestigungselement 16.2 und Teilabschnitte 18.21, 18.22 eines zweiten Paares gezeigt. Die Teilabschnitte 18.21, 18.22 des zweiten Paares bilden das zweite flexible Element 18.2 (hier beispielhafte erste alternative Ausgestaltung). Die Schnittdarstellung von Figur 5b entspricht im Wesentlichen der Schnittdarstellung von Figur 4b.

In Bezug auf Figur 5a und 5b weisen die flexiblen Elemente 18 somit das erste Paar von Teilabschnitten 18.11, 18.12 und das zweite Paar von Teilabschnitten 18.21, 18.22 auf. Wie in Figur 5a und 5b zu erkennen, sind die Teilabschnitte 18.11, 18.12 des ersten Paares und die Teilabschnitte 18.21, 18.22 des zweiten Paares jeweils an zwei in der zweiten Richtung P2 einander gegenüberliegenden Enden der Durchgangsöffnungen 14 angeordnet. Durch die beispielhafte erste alternative Ausgestaltung wird ein besonders kostengünstiger und dennoch stabiler Aufbau erreicht.

In der Schnittdarstellung von Figur 6a sind das erste Befestigungselement 16.1 und ein einziger Teilabschnitt 18.11 gezeigt. Der einzige Teilabschnitt 18.11 bildet das erste flexible Element 18.1 (hier beispielhafte zweite alternative Ausgestaltung). Die Schnittdarstellung von Figur 6a entspricht im Wesentlichen der Schnittdarstellung von Figur 4a.

In der Schnittdarstellung von Figur 6b sind das zweite Befestigungselement 16.2 und ein einziger Teilabschnitt 18.22 gezeigt. Der einzige Teilabschnitt 18.22 bildet das zweite flexible Element 18.2 (hier beispielhafte zweite alternative Ausgestaltung). Die Schnittdarstellung von Figur 6b entspricht im Wesentlichen der Schnittdarstellung von Figur 4b.

In Bezug auf Figur 6a und 6b weisen die flexiblen Elemente 18 somit den einzigen Teilabschnitt 18.11 bzw. den einzigen Teilabschnitt 18.22 auf. Der einzige Teilabschnitt 18.11 und der einzige Teilabschnitt 18.22 sind jeweils an einem dem Objekt 1 abgewandten Ende der Durchgangsöffnungen 14 angeordnet. Durch die beispielhafte zweite alternative Ausgestaltung wird ein im Vergleich zur beispielhaften ersten alternativen Ausgestaltung kostengünstigerer und dennoch stabiler Aufbau erreicht.

Beim ersten und zweiten Ausführungsbeispiel sind die flexiblen Elemente 18 schlauchförmig ausgebildet (vgl. Figur 1; Figur 2, 4a und 4b). Ferner können die flexiblen Elemente 18 auch einen oder mehrere schlauchförmige Teilabschnitte aufweisen (vgl. Figur 5a und 5b, drittes Ausführungsbeispiel; Figur 6a und 6b, viertes Ausführungsbeispiel). Die flexiblen Elemente 18 sind insbesondere elastisch verformbare Elemente, beispielsweise hergestellt aus Silikon oder Gummi.

Alternativ können die flexiblen Elemente 18 in den Durchgangsöffnungen 14 unterschiedlich (z. B. in der ersten Durchgangsöffnung 14.1 durchgängig und in der zweiten Durchgangsöffnung 14.2 unterbrochen und umgekehrt) ausgebildet sein.

Wie in Figur 4a, 4b; Figur 5a, 5b; Figur 6a, 6b zu erkennen, haben die flexiblen Elemente 18 eine erste Ausdehnung D1 parallel zur ersten Richtung P1. Ferner haben die Durchgangsöffnungen 14 eine zweite Ausdehnung D2 parallel zur ersten Richtung P1. Beispielsweise ist die erste Ausdehnung D1 kleiner als die Hälfte der zweiten Ausdehnung D2.

Bei allen Ausführungsbeispielen haben die flexiblen Elemente 18 einen ersten (äußeren) Durchmesser (z. B. entsprechend der ersten Ausdehnung D1). Ferner haben die Befestigungselemente 16 einen zweiten Durchmesser (d. h. Durchmesser des Schafts). Beispielsweise ist der erste Durchmesser kleiner als der zweite Durchmesser. Wie in Figur 1 und 2 zu erkennen, haben die Durchgangsöffnungen 14 jeweils eine an den ersten und zweiten Durchmesser angepasste Form/Kontur.

Bei einem weiteren (fünften) Ausführungsbeispiel ist anstelle der mehreren Durchgangsöffnungen 14 eine einzige Durchgangsöffnung vorgesehen. Ferner kann anstelle der mehreren Befestigungselemente 16 ein einziges Befestigungselement vorgesehen sein. Darüber hinaus kann anstelle der mehreren flexiblen Elemente 18 ein einziges flexibles Element vorgesehen sein.

Beim fünften Ausführungsbeispiel ist die Konfiguration/Funktion der verschiedenen Elemente (d. h. einzige Durchgangsöffnung, einziges Befestigungselement und einziges flexibles Element) analog zum ersten bis vierten Ausführungsbeispiel. Ferner sind beim fünften Ausführungsbeispiel die verschiedenen Elemente in vorteilhafter Weise in der Mitte der Abtasteinheit 10 (d. h. an einer Position in der Mitte zwischen der Schnittlinie A-A und der Schnittlinie B-B nach Figur 3) angeordnet. Dadurch kann wiederum die vorbestimmte Andruckkraft F im Wesentlichen in der Mitte der Abtasteinheit 10 erzeugt werden (analog zum ersten bis vierten Ausführungsbeispiel).

Die Erfindung ermöglicht eine besonders hochauflösende Positionsmessung, wenn die Messteilung 4.1 optisch abtastbar ausgebildet ist. Die Messteilung 4.1 kann alternativ auch magnetisch, induktiv oder kapazitiv abtastbar ausgebildet sein.

## Patentansprüche

1. Abtasteinheit (10) einer Positionsmesseinrichtung (100), mit einem Gehäuse (12),
einer oder mehreren in dem Gehäuse (12) angeordneten Durchgangsöffnungen (14) zum Befestigen der Abtasteinheit (10) an einem Objekt (1), und
einem oder mehreren Befestigungselementen (16), die sich durch die Durchgangsöffnungen (14) hindurch erstrecken,
**dadurch gekennzeichnet, dass**
die Abtasteinheit (10) ein oder mehrere flexible Elemente (18) aufweist, wobei sich die ein oder mehreren flexiblen Elemente (18) zumindest teilweise durch die Durchgangsöffnungen (14) hindurch erstrecken, wobei die ein oder mehreren flexiblen Elemente (18) dazu ausgebildet sind, das Gehäuse (12) der Abtasteinheit (10) an ein Referenzelement (2) anzudrücken.

2. Abtasteinheit (10) nach Anspruch 1, wobei durch die flexiblen Elemente (18) und die Befestigungselemente (16) eine Vorspannvorrichtung gebildet wird.

3. Abtasteinheit (10) nach Anspruch 1 oder 2, wobei die flexiblen Elemente (18) dazu ausgebildet sind, eine vorbestimmte Andruckkraft (F) zu erzeugen, durch die das Gehäuse (12) der Abtasteinheit (10) an das Referenzelement (2) angedrückt wird.

4. Abtasteinheit (10) nach einem der vorhergehenden Ansprüche, wobei die flexiblen Elemente (18) dazu ausgebildet sind, das Gehäuse (12) der Abtasteinheit (10) in einer ersten Richtung (P1) senkrecht zu einer Oberfläche (2.1) des Referenzelements (2) an das Referenzelement (2) anzudrücken.

5. Abtasteinheit (10) nach einem der vorhergehenden Ansprüche, wobei sich die flexiblen Elemente (18) innerhalb der Durchgangsöffnungen (14) in einer zweiten Richtung (P2) senkrecht zu einer Oberfläche (1.1) des Objekts (1) erstrecken, wobei die flexiblen Elemente (18) in der zweiten Richtung (P2) durchgängig ausgebildet sind.

6. Abtasteinheit (10) nach einem der Ansprüche 1 bis 4, wobei die flexiblen Elemente (18) ein erstes Paar von Teilabschnitten (18.11, 18.12) und ein zweites Paar von Teilabschnitten (18.21, 18.22) aufweisen, wobei die Teilabschnitte (18.11, 18.12) des ersten Paares und die Teilabschnitte (18.21, 18.22) des zweiten Paares jeweils an zwei in einer zweiten Richtung (P2) senkrecht zu einer Oberfläche (1.1) des Objekts (1) einander gegenüberliegenden Enden der Durchgangsöffnungen (14) angeordnet sind.

7. Abtasteinheit (10) nach einem der vorhergehenden Ansprüche, wobei die flexiblen Elemente (18) schlauchförmig ausgebildet sind.

8. Abtasteinheit (10) nach einem der vorhergehenden Ansprüche, wobei die flexiblen Elemente (18) elastisch verformbare Elemente sind.

9. Abtasteinheit (10) nach einem der vorhergehenden Ansprüche, wobei die flexiblen Elemente (18) aus Silikon oder Gummi hergestellt sind.

10. Abtasteinheit (10) nach einem der vorhergehenden Ansprüche, wobei die Befestigungselemente (16) als Befestigungsschrauben oder Befestigungsbolzen ausgebildet sind.

11. Positionsmesseinrichtung (100) mit einer Maßverkörperung (4) und einer Abtasteinheit (10) nach einem der vorhergehenden Ansprüche.

12. Positionsmesseinrichtung (100) nach Anspruch 11, wobei die Positionsmesseinrichtung (100) das Referenzelement (2) aufweist, wobei das Referenzelement (2) zwischen der Maßverkörperung (4) und der Abtasteinheit (10) angeordnet ist.

13. Positionsmesseinrichtung (100) nach Anspruch 12, wobei das Referenzelement (2) ein Abstandshalteelement zur Einstellung eines Abstands (L) zwischen der Maßverkörperung (4) und der Abtasteinheit (10) ist.

14. Positionsmesseinrichtung (100) nach Anspruch 12 oder 13, wobei das Referenzelement (2) eine flexible Folie mit einer vorbestimmten Dicke ist.

15. Positionsmesseinrichtung (100) nach einem der Ansprüche 12 bis 14, wobei das Referenzelement (2) im montierten Zustand der Abtasteinheit (10) von der Maßverkörperung (4) und der Abtasteinheit (10) entfernbar ist.

## Claims

1. Scanning unit (10) of a position measuring device (100), comprising a housing (12),
one or more passage openings (14) arranged in the housing (12) for fastening the scanning unit (10) to an object (1), and
one or more fastening elements (16) which extend through the passage openings (14),
**characterized in that**
the scanning unit (10) has one or more flexible elements (18), wherein the one or more flexible elements (18) extend at least partially through the passage openings (14),
wherein the one or more flexible elements (18) are designed to press the housing (12) of the scanning unit (10) against a reference element (2).

2. Scanning unit (10) according to Claim 1, wherein a preloading device is formed by the flexible elements (18) and the fastening elements (16).

3. Scanning unit (10) according to Claim 1 or 2, wherein the flexible elements (18) are designed to generate a predetermined contact-pressure force (F) by which the housing (12) of the scanning unit (10) is pressed against the reference element (2).

4. Scanning unit (10) according to any of the preceding claims, wherein the flexible elements (18) are designed to press the housing (12) of the scanning unit (10) against the reference element (2) in a first direction (P1) perpendicular to a surface (2.1) of the reference element (2).

5. Scanning unit (10) according to any of the preceding claims, wherein the flexible elements (18) extend in a second direction (P2) perpendicular to a surface (1.1) of the object (1) within the passage openings (14), wherein the flexible elements (18) are continuous in the second direction (P2).

6. Scanning unit (10) according to any of Claims 1 to 4, wherein the flexible elements (18) have a first pair of subsections (18.11, 18.12) and a second pair of subsections (18.21, 18.22), wherein the subsections (18.11, 18.12) of the first pair and the subsections (18.21, 18.22) of the second pair are each arranged at two ends of the passage openings (14) situated opposite each other in a second direction (P2) perpendicular to a surface (1.1) of the object (1).

7. Scanning unit (10) according to any of the preceding claims, wherein the flexible elements (18) are tubular.

8. Scanning unit (10) according to any of the preceding claims, wherein the flexible elements (18) are elastically deformable elements.

9. Scanning unit (10) according to any of the preceding claims, wherein the flexible elements (18) are made of silicone or rubber.

10. Scanning unit (10) according to any of the preceding claims, wherein the fastening elements (16) are designed as fastening screws or fastening bolts.

11. Position measuring device (100) comprising a measuring scale (4) and a scanning unit (10) according to any of the preceding claims.

12. Position measuring device (100) according to Claim 11, wherein the position measuring device (100) has the reference element (2), wherein the reference element (2) is arranged between the measuring scale (4) and the scanning unit (10).

13. Position measuring device (100) according to Claim 12, wherein the reference element (2) is a spacer element for setting a distance (L) between the measuring scale (4) and the scanning unit (10).

14. Position measuring device (100) according to Claim 12 or 13, wherein the reference element (2) is a flexible film with a predetermined thickness.

15. Position measuring device (100) according to any of Claims 12 to 14, wherein the reference element (2) can be removed from the measuring scale (4) and the scanning unit (10) in the mounted state of the scanning unit (10).

## Revendications

1. Unité de balayage (10) d'un appareil de mesure de position (100), avec un boîtier (12),
une ou plusieurs ouvertures de passage (14) agencées dans le boîtier (12) pour fixer l'unité de balayage (10) à un objet (1), et
un ou plusieurs éléments de fixation (16) qui s'étendent à travers les ouvertures de passage (14),
**caractérisée en ce que**
l'unité de balayage (10) présente un ou plusieurs éléments flexibles (18), les un ou plusieurs éléments flexibles (18) s'étendant au moins partiellement à travers les ouvertures de passage (14),
les un ou plusieurs éléments flexibles (18) étant réalisés pour presser le boîtier (12) de l'unité de balayage (10) contre un élément de référence (2).

2. Unité de balayage (10) selon la revendication 1, un dispositif de précontrainte étant formé par les éléments flexibles (18) et les éléments de fixation (16).

3. Unité de balayage (10) selon la revendication 1 ou 2, les éléments flexibles (18) étant réalisés pour générer une force de pression prédéterminée (F) par laquelle le boîtier (12) de l'unité de balayage (10) est pressé contre l'élément de référence (2).

4. Unité de balayage (10) selon l'une quelconque des revendications précédentes, les éléments flexibles (18) étant réalisés pour presser le boîtier (12) de l'unité de balayage (10) contre l'élément de référence (2) dans une première direction (P1) perpendiculaire à une surface (2.1) de l'élément de référence (2).

5. Unité de balayage (10) selon l'une quelconque des revendications précédentes, les éléments flexibles (18) s'étendant à l'intérieur des ouvertures de passage (14) dans une deuxième direction (P2) perpendiculaire à une surface (1.1) de l'objet (1), les éléments flexibles (18) étant réalisés de manière continue dans la deuxième direction (P2).

6. Unité de balayage (10) selon l'une quelconque des revendications 1 à 4, les éléments flexibles (18) présentant une première paire de sections partielles (18.11, 18.12) et une deuxième paire de sections partielles (18.21, 18.22), les sections partielles (18.11, 18.12) de la première paire et les sections partielles (18.21, 18.22) de la deuxième paire étant respectivement agencées à deux extrémités des ouvertures de passage (14) opposées l'une à l'autre dans une deuxième direction (P2) perpendiculaire à une surface (1.1) de l'objet (1).

7. Unité de balayage (10) selon l'une quelconque des revendications précédentes, les éléments flexibles (18) étant réalisés sous forme tubulaire.

8. Unité de balayage (10) selon l'une quelconque des revendications précédentes, les éléments flexibles (18) étant des éléments déformables élastiquement.

9. Unité de balayage (10) selon l'une quelconque des revendications précédentes, les éléments flexibles (18) étant fabriqués en silicone ou en caoutchouc.

10. Unité de balayage (10) selon l'une quelconque des revendications précédentes, les éléments de fixation (16) étant réalisés sous forme de vis de fixation ou de boulons de fixation.

11. Appareil de mesure de position (100) avec une mesure matérialisée (4) et une unité de balayage (10) selon l'une quelconque des revendications précédentes.

12. Appareil de mesure de position (100) selon la revendication 11, l'appareil de mesure de position (100) présentant l'élément de référence (2), l'élément de référence (2) étant agencé entre la mesure matérialisée (4) et l'unité de balayage (10).

13. Appareil de mesure de position (100) selon la revendication 12, l'élément de référence (2) étant un élément de maintien de distance pour régler une distance (L) entre la mesure matérialisée (4) et l'unité de balayage (10).

14. Appareil de mesure de position (100) selon la revendication 12 ou 13, l'élément de référence (2) étant un film flexible ayant une épaisseur prédéterminée.

15. Appareil de mesure de position (100) selon l'une quelconque des revendications 12 à 14, l'élément de référence (2) pouvant être retiré de la mesure matérialisée (4) et de l'unité de balayage (10) à l'état monté de l'unité de lecture (10).
